# EUROPÄISCHE PATENTSCHRIFT

(11) **EP 1 627 518 B1**
(45) Veröffentlichungstag und Bekanntmachung des Hinweises auf die Patenterteilung: **16.09.2009**
(21) Anmeldenummer: 04739324.4
(22) Anmeldetag: 24.05.2004
(51) Int. Cl.: H04M 1/725, H04M 1/247

(54) **"MMS-TO-POSTCARD"-VERFAHREN**
MMS-TO-POSTCARD METHOD
PROCEDE PERMETTANT DE TRANSFORMER UN MMS EN CARTE POSTALE

(30) Priorität: 23.05.2003 DE 10323913
(43) Veröffentlichungstag der Anmeldung: 22.02.2006
(73) Patentinhaber: Vodafone Holding GmbH, 40213 Düsseldorf (DE)
(72) Erfinder: LASINSKI, Gerald, 40545 Düsseldorf (DE); CRUSCHWITZ, Alexander, 50259 Pulheim (DE); GAUBA, Alok, 40667 Meerbusch (DE); FUNKE, Stephan, 40880 Ratingen (DE); NOEVER, Stephan, 47877 Willich (DE)
(74) Vertreter: Weisse, Renate
(86) Internationale Anmeldenummer: PCT/EP2004/005570
(87) Internationale Veröffentlichungsnummer: WO 2004/105363

(56) Entgegenhaltungen:
- EP-A- 1 111 883
- "O2 startet MMS to postcard" INSIDE-HANDY.DE, DIE MOBILFUNK-WISSENS-COMMUNITY, [Online] 30. April 2003 (2003-04-30), Seiten 1-1, XP002301901 Gefunden im Internet: URL:"http://www.inside-handy.de/news-druck en-151-o2-startet-MMS-to-Postcard.html"> [gefunden am 2004-10-21]
- "Siemens S45 - Bedienungsanleitung, pages 1, 4-6, 17, 26-33" SIEMENS AG, [Online] 2001, XP002301902 MÜNCHEN Gefunden im Internet: URL:http://www.siemens-mobile.de/repositor y/181/18154/s45_ug_de_dt_2.pdf> [gefunden am 2004-10-21]
- "Handy-Fotos als echte Postkarte verschicken" FOTOPUNKT.DE, ONLINE-MAGAZIN FÜR FOTOGRAFIE UND DIGITAL IMAGING, [Online] 8. April 2003 (2003-04-08), Seiten 1-1, XP002301903 Gefunden im Internet: URL:http://www.fotopunkt.de/modules.php?na me=News&op=printarticle&id=218> [gefunden am 2004-10-21]

## Beschreibung

### Technisches Gebiet

Die Erfindung betrifft ein Verfahren zum *Erstellen und* Versenden von Postkarten über ein Mobilfunknetz, mit folgenden Verfahrenschritten:
(a) Verfassen einer Nachricht mit einem Mobilfunkendgerät, wobei das Mobilfunkendgerät zum Verarbeiten, Versenden sowie Empfangen von Nachrichten ausgebildet ist,
(b) Zuordnen einer Empfängeradresse,
(c) Versenden der Nachricht und der Empfängeradresse an eine Vermittlungsstelle,
(d) Erstellen und postalisches Verschicken durch die Vermittlungsstelle einer Postkarte, die die Nachricht und die Empfängeradresse enthält.

### Stand der Technik

Mobilfunkendgeräte sind heutzutage oft mit einer zusätzlichen Digitalkamera ausgestattet. Mit diesen Digitalkameras können Bilder oder kleinere Videosequenzen aufgenommen werden und unmittelbar mit dem Mobilfunkendgerät über das Mobilfunknetz beispielsweise als MMS (=Multimedia Messaging Service) versandt werden. MMS ist eine Weiterentwicklung des SMS-Standards (=Short Messaging Service) und ermöglicht das Versenden von Multimedia-Nachrichten von MMSkompatiblen Mobilfunkendgeräten an Email-Empfänger oder an andere MMS-taugliche Mobilfunkendgeräte. Beispielsweise können in einer MMS, im Gegensatz zu SMSs, Fotos, Animationen, Melodien und Texte versendet werden.

Stand der Technik ist, dass Fotos mit Text per MMS von einem Mobilfunkendgerät an anderes Mobilfunkendgerät und an E-Mail-Adressen verschickt werden können. Auf der CeBIT 2003 in Hannover wurde beispielsweise demonstriert, wie eine MMS auch als "MMS-Postkarte" verschickt werden kann. Dazu wird mit dem Mobilfunkendgerät ein Bild erzeugt. Dieses Bild wird an eine Vermittlungsstelle gesendet. Als Text werden zunächst die Adressdaten (mit Kommas getrennt), dann eine "#" eingegeben und ein Gruß-Text geschrieben (z.B. Tina Musterfrau, Turmstr. 1, 12345, Tupfingen # Hallo Tina...).

Die Deutsche Post erzeugt schließlich als Vermittlungsstelle eine Postkarte, die der Empfänger am nächsten Tag im Briefkasten vorfindet.

Nachteilig bei diesem Verfahren ist, dass die Syntax zur Adresseingabe relativ kompliziert und wenig anwenderfreundlich ist.

"O2 startet MMS to postcard" beschreibt ein Verfahren, bei dem eine MMS mit einem Bild, der Postadresse des Empfängers und dem Text für die Postkarte an eine Vermittlungsstelle gesendet wird, die dann per Post eine Postkarte an den Empfänger verschickt. Die Adresseneingabe muss in den Text für die Postkarte eingefügt werden, dabei sind die Angaben, wie Name, Straße, Postleitzahl, Ort und Land, durch ein Komma getrennt, einzugeben. Die Eingabe der Adresse ist also für den Benutzer sehr umständlich

"Handy-Fotos als echte Postkarte verschicken" beschreibt ein Verfahren zum Versenden von Foto-Postkarten über eine Vermittlungsstelle. Der Benutzer des Mobilfunkendgerätes besitzt dort ein Kundenkonto und kann die Adressen der Empfänger auf diesem Kundenkonto hinterlegen. Das Adressbuch befindet sich somit im Speicher der Vermittlungsstelle und muss dort umständlich angelegt werden. Die Adressenverwaltung seines Mobilfunkendgerätes kann der Benutzer zum Verschicken von Postkarten über das Mobilfunknetz nicht heranziehen.

Bei Versendung einer Foto-Postkarten stellt der Benutzer eine Verbindung zur Vermittlungsstelle her und sucht dann die dazugehörige Adresse des Empfängers aus seinem Kundenkonto heraus. Diese Vorgehensweise ist für den Benutzer sehr umständlich, da er bei jedem Verschicken zuerst die Vermittlungsstelle anrufen muss, um dann die jeweilige Empfängeradresse für die Versendung der Foto-Postkarte aus zuwählen.

Die "Siemens S45 - Bedienungsanleitung" offenbart eine Funktion "Adressbuch" mit Speichermöglichkeit postalischer Adressdaten, d.h. Vorname, Name, Straße, Postleitzahl, Stadt, Land. Markierte Daten aus diesem "Adressbuch" können mittels einer Funktion "Einfügen aus ..." z.B. in den Text einer SMS kopiert werden.

### Offenbarung der Erfindung

Aufgabe der Erfindung ist es daher, ein Verfahren zu schaffen, um die Postkarten am Mobilfunkendgerät leichter zu erstellen und über die Vermittlungsstelle zu versenden.

Erfindungsgemäß wird die Aufgabe dadurch gelöst, dass bei einem Verfahren zum Erstellen und Versenden von Postkarten über ein Mobilfunknetz der eingangs genannten Art,
(e) die Empfängeradresse als Empfängerdaten aus einer Adressdatenbank des Mobilfunkengeräts ausgesucht und der verfassten Nachricht zugeordnet wird, wobei ein Syntaxgenerator des Mobilfunkendgeräts die Empfängerdaten in die richtige Reihenfolge und mit der korrekten Syntax sowie mit den richtigen Steuerzeichen setzt und
(f) die so bearbeiteten Empfängerdaten mit einer Textnachricht und/oder einem Bild zu einer MMS verknüpft sind, welche über das Mobilfunknetz zur Vermittlungsstelle versendet werden, und
(g) in dem Mobilfunkendgerät eine Funktion zum Versenden von Postkarten vorgesehen ist, wobei die Adresse der Vermittlungsstelle bereits voreingestellt ist.

Die Erfindung beruht auf dem Prinzip, dass man in die Mobilfunkendgeräte (Handys) geeignete Mittel einsetzt, welche die Eingabe der Postkarte dahingehend vereinfacht, dass der Anwender lediglich noch die Funktion "Versand Postkarte" aussucht, den Postkartenempfänger aus dem Adressbuch wählt und das Programm automatisch diese Nachricht an die Vermittlungsstelle versendet. Die Vermittlungsstelle leitet die Nachricht als Postkarte auf dem üblichen Postweg an den vorgegebenen Empfänger weiter.

Gemäß des erfindungsgemäßen Verfahrens ist/sind die zu versendende Textnachricht und/oder das Bild und/oder die Animation als SMS, EMS oder MMS vorgesehen, die über das Mobilfunknetz zur Vermittlungsstelle gesendet wird/werden. Durch diese Maßnahme kann auf übliche Übermittlungswege zur Übermittlung der Nachricht an die Vermittlungsstelle zurückgegriffen werden. Dadurch lässt sich das Verfahren auf einfache Weise realisieren.

Gemäß des erfindungsgemäßen Verfahrens ist in dem Mobilfunkendgerät eine Funktion zum Versenden von Postkarten vorgesehen, wobei die Adresse einer Vermittlungsstelle bereits voreingestellt ist. Durch diese Funktion, die beispielsweise als Menüpunkt von dem Anwender auswählbar ist, kann sehr leicht eine Postkarte von jedem Ort versendet werden. Vorzugsweise wird die Funktion zum Versenden von Postkarten dann als Java-Applet ausgebildet. Java ist in der Telekommunikation eine weit verbreitete Programmiersprache, weshalb sich die Anwendung als Java-Applet besonders gut eignet.

Eine Vereinfachung für den Anwender wird ferner dadurch erreicht, dass bestimmte Textbausteine vorgegeben sind, welche zum Erstellen der Nachricht verwendet werden können. Dem Anwender werden bereits Textbausteine zum Erstellen der Nachricht vorgeschlagen, die er schließlich zum Erstellen seines eigenen Textes benutzen darf.

Vorzugsweise werden bestimmte Textbausteine nur auf bestimmte Reizbegriffe zur Auswahl angezeigt.

In einer weiteren vorteilhaften Ausbildung des erfindungsgemäßen Verfahrens weisen die Mobilfunkendgeräte zur Bedienung ein grafisches Bedienerfeld auf, welches in einer bevorzugten Ausgestaltung menügesteuert ausgebildet ist.

Eine bevorzugte Ausbildung des erfindungsgemäßen Verfahrens wird dadurch erzielt, dass die Farbe der Postkarte in Abhängigkeit vom geschriebenen Text ausgewählt wird. Dadurch ist es für den Anwender besonders einfach, sich für bestimmte Farben zu entscheiden. So kann beispielsweise für die Begriffe "Liebe" oder "heiß" die Farbe "Rot" bzw. für die Begriffe "Wasser" oder "kalt" die Farbe "Blau" zur Farbauswahl für die Postkarte angeboten werden.

Oft möchte der Anwender die Fotos bzw. Bilder nochmals kurz überarbeiten, bevor er sie auf die Reise schickt. Es ist daher vorteilhaft, wenn sich die Bilder bzw. Fotos bereits am Versende- bzw. Erzeugerort noch bearbeiten lassen. Eine vorteilhafte Ausgestaltung des erfindungsgemäßen Verfahrens ergibt sich dadurch, dass die Bilder bzw. Fotos für die Postkarte sich vom Anwender bearbeiten lassen.

Weitere Vorteile der Erfindung ergeben sich aus dem Gegenstand der Unteransprüche sowie in den Zeichnungen mit den dazugehörigen Beschreibungen.

### Kurze Beschreibung der Zeichnung

- Fig. 1: zeigt die Versendung einer Postkarte über ein Mobilfunknetz nach dem Stand der Technik.
- Fig. 2: zeigt das erfindungsgemäße Verfahren zur Versendung einer Postkarte über ein Mobilfunknetz.

### Bevorzugtes Ausführungsbeispiel

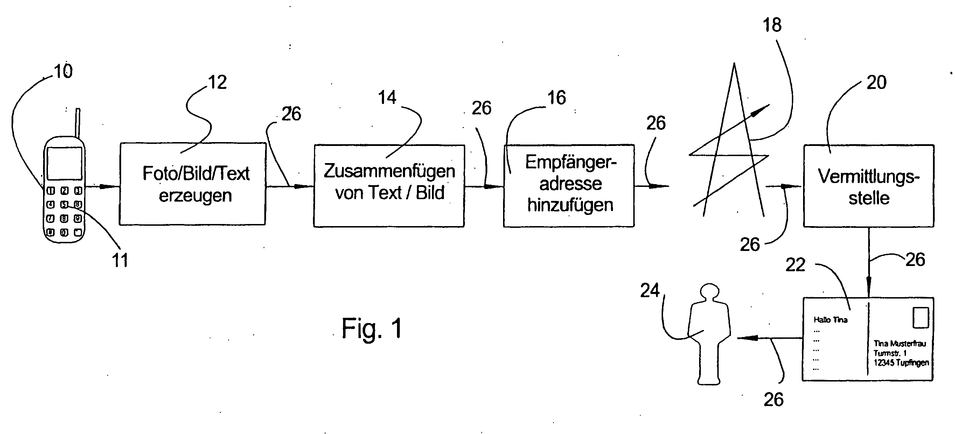

In Fig. 1 wird die Versendung einer Postkarte 22 über ein Mobilfunknetz 18 nach dem Stand der Technik gezeigt. Mit 10 wird ein Mobilfunkendgerät bezeichnet. Das Mobilfunkendgerät 10 ist in der Lage, Bilder bzw. Fotos oder ggf. sogar kleine Filmsequenzen zu erzeugen und zu verarbeiten. Das Erzeugen eines Fotos oder eines Bildes sowie eines Textes wird in Fig.1 mit 12 bezeichnet und als Kasten dargestellt. Das Foto bzw. das Bild wird mit einem Text zusammengefügt. Dieser Verfahrensschritt wird durch Kasten 14 symbolisiert. Pfeile 26 verweisen immer auf den jeweils nächsten Verfahrensschritt. Dabei werden die Text- und Bild-/Fotodaten mit einer Empfängeradresse verknüpft, Kasten 16. Die Empfängerdaten werden dazu in einer geeigneten Syntax und mit den erforderlichen Steuerzeichen dem Text manuell über ein Bedienerfeld 11 des Mobilfunkendgeräts 10 hinzugefügt. Das Foto und der Text sowie die Empfängeradresse werden als MMS (Multimedia Messaging Service) nun über ein Mobilfunknetz 18 an eine Vermittlungsstelle 20 versandt. Die Vermittlungsstelle 20 erzeugt aus dem übermittelten Foto-Bildmotiv und dem Text eine Postkarte 22. Diese Postkarte 22 wird mit der herkömmlichen Briefpost an den gewünschten Empfänger 24 verschickt.

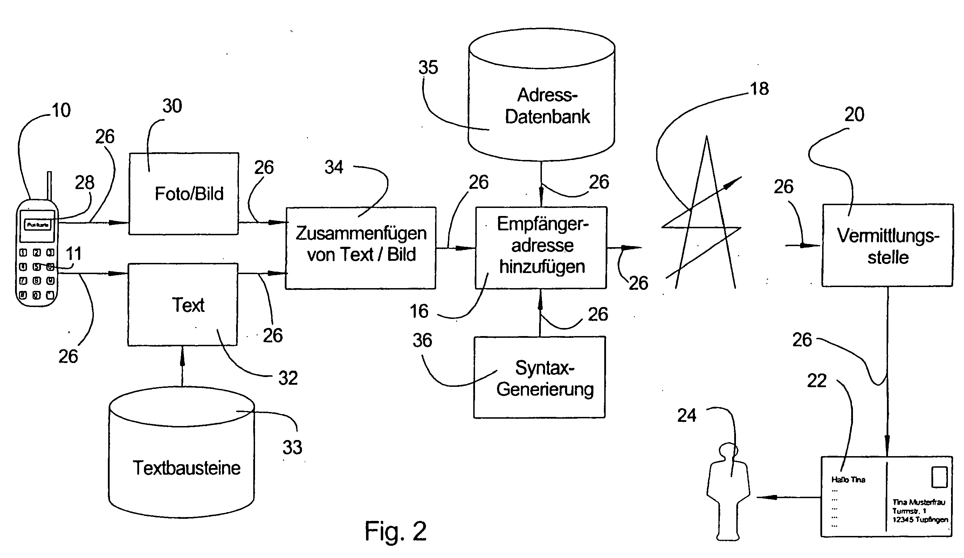

In Fig. 2 wird das erfindungsgemäße Verfahren zur Versendung der Postkarte 22 über das Mobilfunknetz 18 gezeigt. Übereinstimmende Verfahrensschritte und Bestandteile werden mit sich entsprechenden Bezugszeichen bezeichnet. In Fig. 2 wird das Mobilfunkendgerät 10 mit dem Bedienerfeld 11 dargestellt. Über das Bedienerfeld 11 lässt sich ein Menü mit einer grafischen Bedienoberfläche 28 bedienen. Aus dem Menü ist für das Versenden einer Postkarte 22 nach dem erfindungsgemäßen Verfahren der Menüpunkt "Postkarte" auszuwählen. Unter diesem Menüpunkt "Postkarte" beziehungsweise mit geeigneten Unterpunkten kann ein FotoBild 30 und ein Kartentext 32 zusammengefügt werden. Zur Erstellung eines Kartentextes 32 ist eine Texthilfe 33 vorgesehen, die bei Eingabe bestimmter Reizworte vordefinierte Textbausteine vorschlägt. Der Vorgang des Zusammenfügens von dem Foto/Bild 30 und dem Kartentext 32 wird durch Kasten 34 symbolisiert. Es spielt bei vorliegender Erfindung grundsätzlich keine Rolle, ob es sich um ein künstlich erzeugtes Bild bzw. Grafik oder um ein reales Foto handelt, da die digitale Bildverarbeitung hierin praktisch keine Unterschiede macht.

Falls das Mobilfunkendgerät 10 jedoch nicht in der Lage sein sollte, selbst Fotos zu erzeugen bzw. Bilder zu verarbeiten oder der Anwender hat kein passendes Motiv zur Hand, kann im Kartentext ein Motiv, beispielsweise "Blumen", angegeben werden. Das Mobilfunkendgerät 10 ist derart ausgebildet, dass es verschiedene Motive oder Hintergründe vorschlagen kann. Die Vorschläge werden z.B. anhand von prägnanten "Schlagworten", welche im Kartentexte vorkommen, ermittelt.

Anschließend wird der Name des Empfängers 24 aus einer Adressdatenbank 35 des Mobilfunkendgeräts 10 ausgesucht. Die dem Empfängernamen zugeordneten Empfängerdaten, z.B. Anschrift, werden von einem Syntaxgenerator 36 des Mobilfunkendgeräts 10 in der richtigen Reihenfolge und mit der richtigen Syntax sowie mit den richtigen Steuerzeichen gesetzt. Diese so bearbeiteten Empfängerdaten werden zu einer MMS mit dem Foto 22 und dem Kartentext 32 verknüpft. Diese MMS wird über das Mobilfunknetz 18 an die Vermittlungsstelle 20 versandt. Die Vermittlungsstelle 20 erzeugt aus den vorliegenden Daten nun die Postkarte 22 aus dem Foto-/Bildmotiv 30 und dem Kartentext 32.

Liegt der Vermittlungsstelle 18 jedoch nur eine Motivbeschreibung für die zu erzeugende Postkarte 22 vor, wird das entsprechende Motiv, z.B. Blumen, aus einer Datenbank der Vermittlungsstelle 20 zur Postkartenerzeugung dem Kartentext 32 hinzugefügt.

Anschließend wird die so erzeugte Postkarte 22 über die herkömmliche Post an den Empfänger versandt.

## Patentansprüche

1. Verfahren zum Erstellen und Versenden von Postkarten (22) über ein Mobilfunknetz (18) mit folgenden Verfahrenschritten:
(a) Verfassen einer Nachricht (32) mit einem Mobilfunkendgerät (10), wobei das Mobilfunkendgerät (10) ein zum Verarbeiten, Versenden sowie Empfangen von Nachrichten (32) ausgebildet ist,
(b) Zuordnen einer Empfängeradresse (16),
(c) Versenden der Nachricht (32) und der Empfängeradresse an eine Vermittlungsstelle (20),
(d) Erstellen und postalisches Verschicken durch die Vermittlungsstelle (20) einer Postkarte (22), die die Nachricht (32) und die Empfängeradresse enthält,
**dadurch gekennzeichnet, dass**
(e) die Empfängeradresse als Empfängerdaten aus einer Adressdatenbank (35) des Mobilfunkendgeräts (10) ausgesucht und der verfassten Nachricht (32) zugeordnet wird, wobei ein Syntaxgenerator (36) des Mobilfunkendgeräts (10) die Empfängerdaten in die richtige Reihenfolge und mit der korrekten Syntax sowie mit den richtigen Steuerzeichen setzt und
(f) die so bearbeiteten Empfängerdaten mit einer Textnachricht (32) und/oder einem Bild (30) zu einer MMS verknüpft sind, welche über das Mobilfunknetz (18) zur Vermittlungsstelle (20) versendet werden, und
(g) in dem Mobilfunkendgerät (10) eine Funktion (28) zum Versenden von Postkarten (22) vorgesehen ist, wobei die Adresse der Vermittlungsstelle (20) bereits voreingestellt ist.

2. Verfahren zum Erstellen und Versenden von Postkarten (22) über ein Mobilfunknetz (18) nach Anspruch 1, **dadurch gekennzeichnet, dass** die Funktion zum Versenden von Postkarten (22) als Java-Applet ausgebildet ist.

3. Verfahren zum Erstellen und Versenden von Postkarten (22) über ein Mobilfunknetz (18) nach einem der Ansprüche 1 bis 2, **dadurch gekennzeichnet, dass** bestimmte Textbausteine vorgegeben sind, welche zum Erstellen der Nachricht (32) verwendet werden können.

4. Verfahren zum Erstellen und Versenden von Postkarten (22) über ein Mobilfunknetz (18) nach Anspruch 3, **dadurch gekennzeichnet, dass** die vorgegebenen Textbausteine auf bestimmte Reizbegriffe reagieren und verwendbar sind.

5. Verfahren zum Erstellen und Versenden von Postkarten (22) über ein Mobilfunknetz (18) nach einem der Ansprüche 1 bis 4, **dadurch gekennzeichnet, dass** das Mobilfunkendgerät (10) ein grafisches Bedienerfeld (11, 28) aufweist.

6. Verfahren zum Erstellen und Versenden von Postkarten (22) über ein Mobilfunknetz (18) nach Anspruch 5, **dadurch gekennzeichnet, dass** das grafische Bedienerfeld (11, 28) menügesteuert ausgebildet ist.

7. Verfahren zum Erstellen und Versenden von Postkarten (22) über ein Mobilfunknetz (18) nach einem der Ansprüche 1 bis 7, **dadurch gekennzeichnet, dass** die Farbe der Postkarte (22) in Abhängigkeit vom geschriebenen Text (32) ausgewählt wird.

8. Verfahren zum Erstellen und Versenden von Postkarten (22) über ein Mobilfunknetz (18) nach einem der Ansprüche 1 bis 7, **dadurch gekennzeichnet, dass** die Bilder bzw. Fotos (30) für die Postkarte (22) sich vom Anwender bearbeiten lassen.

## Claims

1. A method for generating and sending postcards (22) via a mobile communication network (18), the method comprising the steps of:
(a) writing a message (32) using a mobile station (10), wherein the mobile station (10) is adapted to process, send and receive messages (32);
(b) assigning a recipients address (16);
(c) sending the message (32) and the recipients address to a switching centre (20);
(d) generating and postally sending a postcard (22) containing the message (32) and the recipients address by the switching centre (20);
**characterized in that**
(e) the recipients address is selected as recipient data from an address data base (35) of the mobile station (10) and is assigned to the written message (32), wherein a syntax generator (36) of the mobile station (10) sets the recipient data to the correct order and the correct syntax using the correct control characters; and
(f) the accordingly processed recipient data is combined with a text message (32) and/or a picture (30) to a MMS, which is send via the mobile communication network (18) to the switching centre (20); and
(g) a function (28) for sending postcards (22) is provided in the mobile station (10) wherein the address of the switching centre (20) is already preset.

2. A method for generating and sending postcards (22) via a mobile communication network (18) according to claim 1, **characterised in that** the function for sending postcards (22) is designed as java applet.

3. A method for generating and sending postcards (22) via a mobile communication network (18) according to any of claims 1 to 2, **characterised in that** certain text modules are predetermined and can be used for generating the messages (32).

4. A method for generating and sending postcards (22) via a mobile communication network (18) according to claim 3, **characterised in that** the predetermined text modules react and are usable upon certain stimulus terms.

5. A method for generating and sending postcards (22) via a mobile communication network (18) according to any of claims 1 to 4, **characterised in that** the mobile station (10) comprises a graphic control panel (11, 28).

6. A method for generating and sending postcards (22) via a mobile communication network (18) according to claim 5, **characterised in that** the graphic control panel is menu-driven.

7. A method for generating and sending postcards (22) via a mobile communication network (18) according to any of claims 1 to 7, **characterised in that** the colour of the postcard (22) is selected depending on the written text (32).

8. A method for generating and sending postcards (22) via a mobile communication network (18) according to any of claims 1 to 7, **characterised in that** the pictures or photos (30) for the postcard (22) are editable by the user.

## Revendications

1. Procédé de création et d'envoi de cartes postales (22) par l'intermédiaire d'un réseau de radiotéléphonie mobile (18) comprenant les étapes de procédé suivantes :
(a) Rédaction d'un message (32) à l'aide d'un terminal de radiotéléphonie (10), le terminal de radiotéléphonie (10) étant configuré de façon à traiter, envoyer et recevoir des messages (32),
(b) Affectation d'une adresse destinataire (16),
(c) Envoi du message (32) et de l'adresse destinataire à un central (20),
(d) Création et envoi postal par le central (20) d'une carte postale (22) comprenant le message (32) et l'adresse destinataire,
**caractérisé en ce que**
(e) l'adresse destinataire est choisie parmi une banque de données d'adresse (35) du terminal de radiotéléphonie (10) et affectée au message rédigé (32), un générateur de syntaxe (36) du terminal de radiotéléphonie (10) mettant les données destinataire dans le bon ordre, avec la bonne syntaxe et les bons signes de commande et
(f) les données destinataire ainsi traitées sont couplées à un MMS à l'aide d'un texto (32) et/ou une image (30) qui sont envoyés au central (20) par l'intermédiaire du réseau de radiotéléphonie mobile (18), et
(g) une fonction (28) pour envoyer des cartes postales (22) est prévue dans le terminal de radiotéléphonie mobile (10), l'adresse du central (20) étant déjà préconfigurée.

2. Procédé pour la création et l'envoi de cartes postales (22) par l'intermédiaire d'un réseau de radiotéléphonie mobile (18) selon la revendication 1, **caractérisé en ce que** la fonction pour envoyer les cartes postales (22) est configurée sous forme de Java Applet.

3. Procédé pour la création et l'envoi de cartes postales (22) par l'intermédiaire d'un réseau de radiotéléphonie mobile (18) selon l'une quelconque des revendications 1 à 2, **caractérisé en ce que** certains composants textuels pouvant être utilisés pour créer le message (32) sont prédonnés.

4. Procédé pour la création et l'envoi de cartes postales (22) par l'intermédiaire d'un réseau de radiotéléphonie mobile (18) selon la revendication 3, **caractérisé en ce que** les composants textuels prédonnés réagissent à certains stimuli lexicaux et peuvent être utilisés.

5. Procédé pour la création et l'envoi de cartes postales (22) par l'intermédiaire d'un réseau de radiotéléphonie mobile (18) selon l'une quelconque des revendications 1 à 4, **caractérisé en ce que** le terminal de radiotéléphonie (10) présente une interface d'utilisation graphique (11, 28).

6. Procédé pour la création et l'envoi de cartes postales (22) par l'intermédiaire d'un réseau de radiotéléphonie mobile (18) selon la revendication 5, **caractérisé en ce que** l'interface d'utilisation graphique (11, 28) présente une configuration commandée par menu.

7. Procédé pour la création et l'envoi de cartes postales (22) par l'intermédiaire d'un réseau de radiotéléphonie mobile (18) selon l'une quelconque des revendications 1 à 7, **caractérisé en ce que** la couleur de la carte postale (22) est choisie en fonction du texte écrit (32).

8. Procédé pour la création et l'envoi de cartes postales (22) par l'intermédiaire d'un réseau de radiotéléphonie mobile (18) selon l'une quelconque des revendications 1 à 7, **caractérisé en ce que** les images ou les photos (30) destinées à la carte postale (22) peuvent être traitées par l'utilisateur.
